# EUROPEAN PATENT APPLICATION

(11) **EP 0 580 130 A1**
(43) Date of publication of application: **26.01.1994**
(21) Application number: 93111613.1
(22) Date of filing: 20.07.1993
(51) Int. Cl.: H02G 3/22, H02G 15/013, F16L 5/02

(54) **Lead-wire grommet**

(30) Priority: 21.07.1992 JP 194053/92; 21.07.1992 JP 194054/92
(71) Applicant: ICHIKOH INDUSTRIES LIMITED, Shinagawa-ku Tokyo 141 (JP); YUGEN-GAISHA SHIBA SEISAKUSHO, Ebina-shi Kanagawa (JP)
(72) Inventor: Kato, Akio, Hadano-Shi, Kanagawa (JP); Matsuo, Hiroyoshi, Chigasaki-Shi, Kanagawa (JP)
(74) Representative: Grünecker, Kinkeldey, Stockmair & Schwanhäusser Anwaltssozietät

(57) **Abstract**

The present invention provides a highly watertight lead-wire grommet for water-tightly passing at least a lead wire through an opening formed in a wall (1).

The lead-wire grommet comprises a rubber-made inner member (4) having at least an insertion hole (40) through which the lead wire (3) is passed as tightly fitted and a slit (41) through which the lead wire (3) is set into the insertion hole (40). Also the grommet comprises a rubber-made outer member (5) having a retention hole (51) in which the inner member (4) is retained as tightly fitted, and an engagement groove (55) at which the outer member (5) is tightly fitted on the edge of the opening (10) in the wall (1). As a result, retaining the inner member (4) as tightly fitted in the retention hole (51) in the outer member (5) causes the walls of the slit (41) in the inner member (4) to closely fit each other, thereby providing a higher watertightness of the structure.

Also, a resin-made cap (6) and ring (7) are retained as tightly fitted in a rubber-made outer member (8). By pressing a rubber-made inner member (4) with the cap (6) and ring (7) from opposite sides, it is possible to positively prevent the inner member (7) from slipping out of the outer member (8).

## Description

### BACKGROUND OF THE INVENTION

### a) Field of the Invention

The present invention relates to a rubber- or rubber/synthetic resin-grommet for watertight passage of at least a lead wire through an opening formed in a wall from one side of the wall to the other side and which does not need any taping of the lead wire to the wall for sealing a space or clearance between the opening and the lead wire passed through the opening.

The lead-wire grommet according to the present invention is destined for use to water-tightly pass a lead wire through an opening formed in a wall that a water is blocked from flowing through between the lead-wire grommet and the edge of the opening in the wall and between the lead-wire grommet and the lead wire from one side of the wall to the other side which must be kept watertight. This lead-wire grommet is used, for example, for water-tightly leading out lead wires connected to an electric apparatus which has to be kept off water through an opening formed in a container housing the electric apparatus to outside the container to thereby prevent a water from entering into the container, or for water-tightly passing lead wires connected between a rear combination lamp and a battery on a car through an opening formed in a wall or car body defining a trunk room of the car in order to prevent water from entering into the trunk room.

More particularly, the present invention relates to a highly watertight lead-wire grommet.

### b) Description of Prior Art

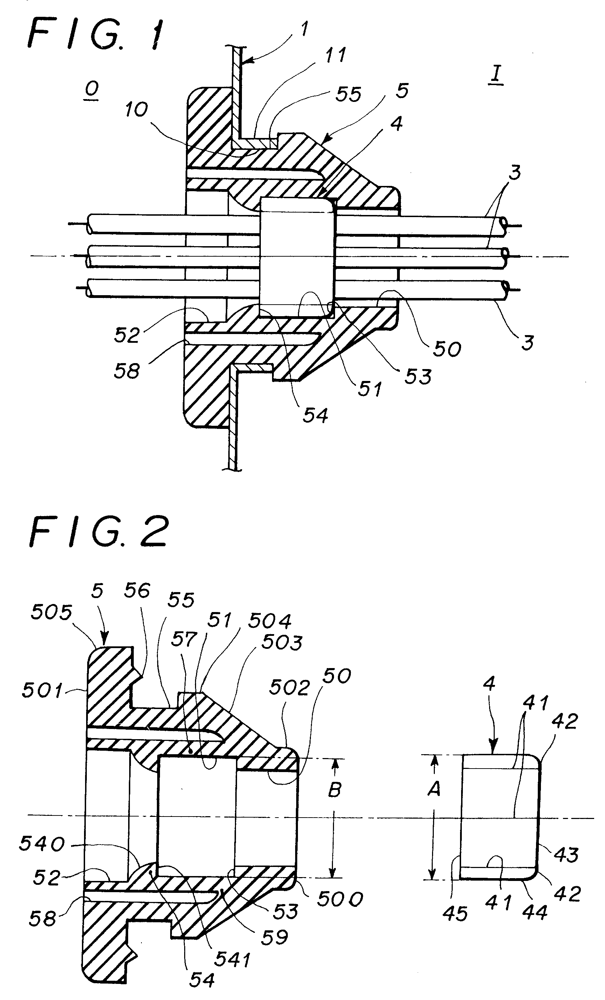

Heretofore, various lead-wire grommets of the above kind have been proposed. A typical example is known from Fig. 2 showing a prior art in the publication of the U.S. Pat. No. 4,845,600. This example consists of two rubber bushings 15 and 16 each having an insertion hole through which lead wires 10 are passed water-tightly as tightly fitted. These rubber bushings 15 and 16 are water-tightly fitted in through-holes, respectively, formed in partition walls 4 and 14, respectively to prevent water from entering into the inner chamber of a spoiler 2 and the lamp house of a high-mount stop lamp 3.

However, it is not easy to water-tightly pass the lead wires 10 as tightly fitted through the insertion holes in the rubber bushings 15 and 16 because the inside diameters of the insertion holes in the rubber bushings 15 and 16 are somewhat smaller than the outside diameter of the lead wires.

For easy watertight passing of the lead wires through the insertion holes, the rubber grommet (rubber bushing) has slits formed radially from the outer circumference thereof to the insertion holes. As the lead wires are forced toward the insertion holes from the outer circumference of the rubber grommet through the slits therein, the rubber grommet is elastically deformed at the slits so that the lead wires can be easily set in the insertion holes. When the lead wires are completely set in the insertion holes, the rubber grommet restores its initial shape due to their elasticity.

### SUMMARY OF THE INVENTION

The present invention has a primary object to provide a highly watertight lead-wire grommet.

The above object is accomplished by providing a lead-wire grommet constructed as will be described in the following. Namely, the grommet according to the present invention has formed in a rubber-made inner member thereof at least an insertion hole through which a lead wire is passed as tightly fitted, and a slit through which the lead wire is inserted for setting in the insertion hole. The grommet has also formed in a rubber-made outer member thereof a retention hole in which the inner member is held as tightly fitted, and an engagement groove at which the outer member is tightly fitted on the edge of an opening formed in a support wall.

Thus, the inner member in which a lead wire is water-tightly set in the insertion hole thereof is held as tightly fitted in the retention hole in the outer member, the tight fitting will cause the walls of the slits in the inner member to closely fit each other, resulting in a higher watertightness.

The present invention has another object to provide a lead-wire grommet in which the inner member can be positively blocked from slipping out of the outer member.

The above object is accomplished by providing a lead-wire grommet constructed as follows. Namely, a rubber-made inner member having lead wires passed through insertion holes thereof as tightly fitted is retained in a resin-made cap as tightly fitted, the resin-made cap and a resin-made ring are held in a retention hole formed in a rubber-made outer member and fitted in each other, and the inner member is pressed between the cap and ring from opposite sides in the direction of lead-wire insertion.

Thus, the present invention provides a lead-wire grommet of which the inner member can be positively blocked from coming out of the outer member.

### BRIEF DESCRIPTION OF THE DRAWINGS

Figs. 1 to 7 show together a first embodiment of the lead-wire grommet according to the present invention, of which:
Fig. 1 is a sectional view of the lead-wire grommet according to the present invention, showing the assembled lead-wire grommet;
Fig. 2 is a sectional view of the lead-wire grommet according to the present invention, showing the disassembled state thereof;
Fig. 3(A) is a front view of an inner member having five through-holes formed therein and through which lead wires are to be passed;
Fig. 3(B) is a front view of an inner member having six through-holes formed therein and through which lead wires are to be passed;
Fig. 3(C) is a front view of an inner member having eight through-holes formed therein and through which lead wires are to be passed;
Fig. 4 is a sectional view of the lead-wire grommet fixed to a car body, the inner member being pressed into the tight-fit portion of the outer member already fixed to the car body;
Fig. 5 is a sectional view of the lead-wire grommet, the outer member in which the inner member has already been inserted being fixed in an opening formed in a car body;
Fig. 6 is a sectional view of the lead-wire grommet, tight-fit portion of the outer member and the inner member fitted in a flexible coupling being deflected with respect to the stationary fitted portion of the outer member;
Fig. 7(A) is a sectional view of a car body having a small opening formed therein and an outer member suitable for fitting in the opening;
Fig. 7(B) is a sectional view of a car body having a medium-size opening formed therein and an outer member suitable for fitting in the opening;
Fig. 7(C) is a sectional view of a car body having a large opening formed therein and an outer member suitable for fitting in the opening; and
Figs. 8 to 10 show together a second embodiment of the lead-wire grommet according to the present invention, of which:

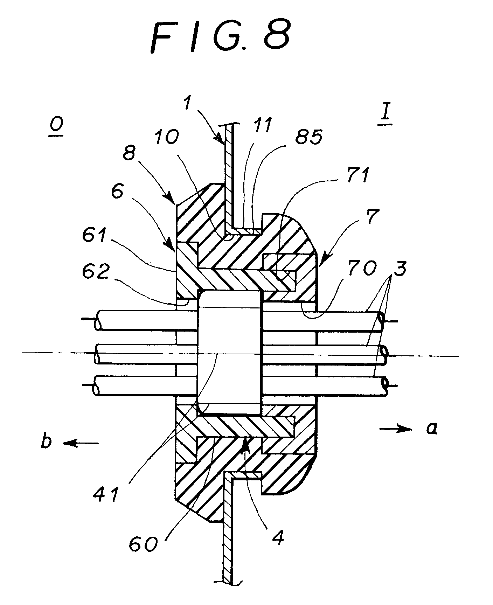

Fig. 8 is a sectional view of the second embodiment, showing the assembled state thereof;

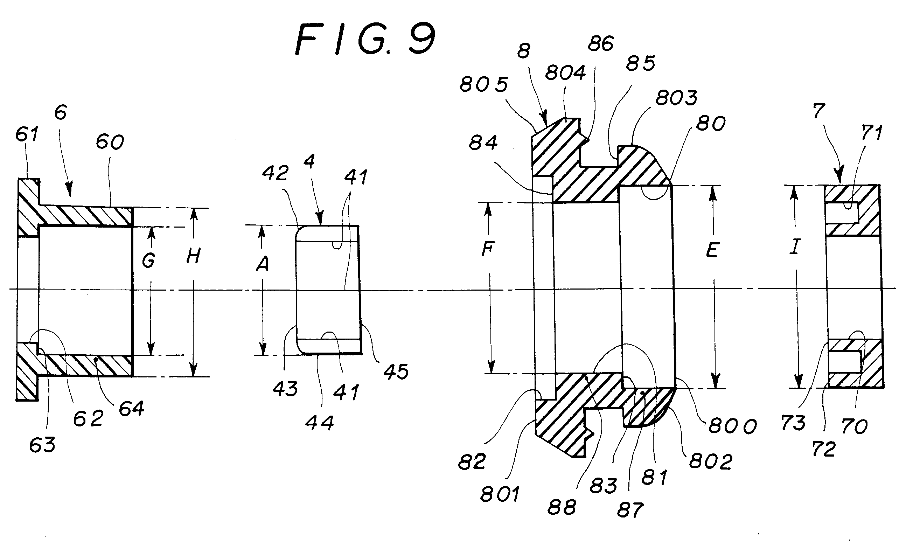

Fig. 9 is an exploded sectional view of the lead-wire grommet in consideration, showing the outer and inner members, cap and ring thereof disassembled from one another;

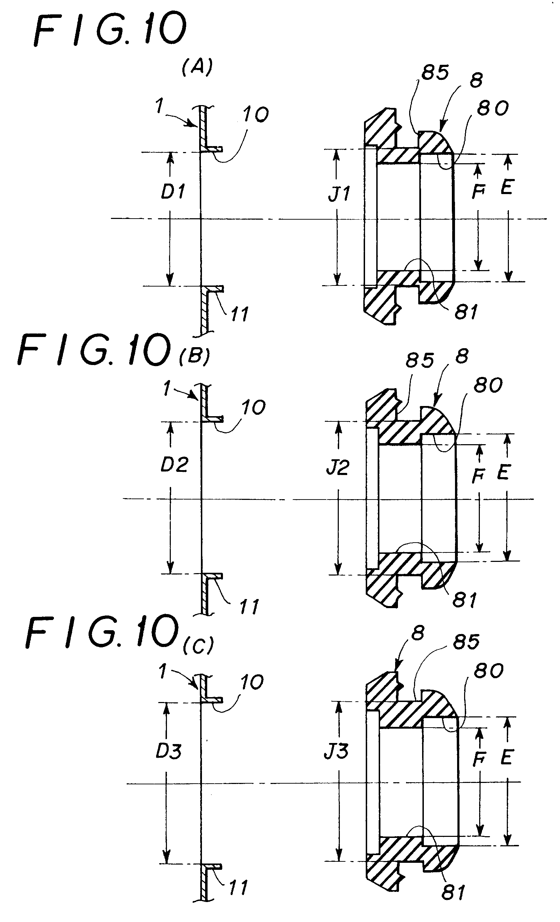

Fig. 10(A) is a sectional view of a car body having a small opening formed therein and an outer member suitable for fitting in the opening;
Fig. 10(B) is a sectional view of a car body having a medium-size opening formed therein and an outer member suitable for fitting in the opening; and
Fig. 10(C) is a sectional view of a car body having a large opening formed therein and an outer member suitable for fitting in the opening.

### DETAILED DESCRIPTION OF THE PREFERRED EMBODIMENTS

Figs. 1 to 7 show together the first embodiment of the lead-wire grommet according to the present invention.

This embodiment will be explained concerning its use to water-tightly fix lead wires connecting, for example, a rear combination lamp of a car and a power source to each other through a wall of the car body.

In Fig. 1, reference numeral 1 denotes a wall, a portion of the car body. The wall 1 defines a trunk room I of the car to the right thereof as shown in Fig. 1. To the left of the wall 1 is a convexity O where the rear combination lamp is disposed. The lead-wire grommet according to the present invention is used to prevent water from coming from the convexity O where the rear combination lamp at the left of the wall 1 is disposed into the trunk room I of the car at the right side of the wall 1.

As seen from Fig. 1, a circular opening 10 is formed in the wall 1 and the edge of the opening 10 is bent at a right angle into the trunk room I to form a short circular flange 11.

In Figures, reference numeral 3 denotes lead wires which connect a vehicle lamp (not shown) such as rear combination lamp and a power source (not shown) to each other. The lead wires 3 are an ordinary lead wire consisting of a conductor and a cylindrical insulation tube sheathing the conductor as shown in Fig. 1.

Reference numeral 4 denotes an inner member. The inner member 4 is made of a synthetic rubber such as EPDM (ethylene propylene rubber) and has the form of a short cylinder. As shown in Fig. 2, the inner member 4 is so rounded at a corner 42 defined by one end 43 (at the right side of the inner member 4 in Fig. 2) and outer circumference 44 as to easily be insertable into a through-hole 51 formed in an outer member 5 which will be described later.

The inner member 4 has at least an insertion hole 40 formed therein as regularly spaced and through which the lead wire 3 is to be passed, and also has slits 41 cut therein radially from the outer circumference thereof to the lead-wire insertion hole 40 and through which the lead wire 3 is to be placed into the insertion hole 40. The inside diameter of the lead-wire insertion hole 40 in the inner member 4 is a little smaller than the outside diameter of the lead wire 3 so that the lead wire 3 can be passed as tightly fitted through the insertion hole 40. The slit 41 is made by cutting the inner member 4 with a sharp blade such as razer-edge.

Reference numeral 5 in Fig. 2 denotes an outer member. The outer member 5 is made of a synthetic rubber such as EPDM (ethylene propylene rubber). It has the general form of a truncated cone of which one end face 500 (right end face in Fig. 2) is formed as a small circle while the other end face 501 (left end face in Fig. 2) is as a large circle. More particularly, the outer member 5 comprises a small-diameter tubular portion 502 at one end thereof, a slope portion 503 of which the outside diameter gradually increases as it goes from the one end toward the middle portion, a medium-diameter tubular portion 504, an engagement groove 55 which will be discussed later, and a large-diameter flange 505 at the other end. This structure facilitates to fit the outer member 5 on the flange 11 at the edge of the opening 10 in the wall 1.

The outer member 5 has formed in the center thereof through-holes 50, 51 and 52 through which the lead wires 3 are passed and in which the inner member 4 is retained as tightly fitted. Among these retention holes 50 to 52, the one 50 at one end of the outer member 5 has a small inside diameter, the middle retention hole 51 has a medium inside diameter, and the retention hole 52 at the other end has a large inside diameter. The inside diameter B of the medium retention hole 51 is somewhat smaller than the outside diameter A of the inner member 4 so that the inner member 4 can be tightly fitted the retention hole 51. The inner circumference of the medium retention hole 51, in which the inner member 4 is tightly fitted, is referred to as a "tight-fit portion" 57 herein.

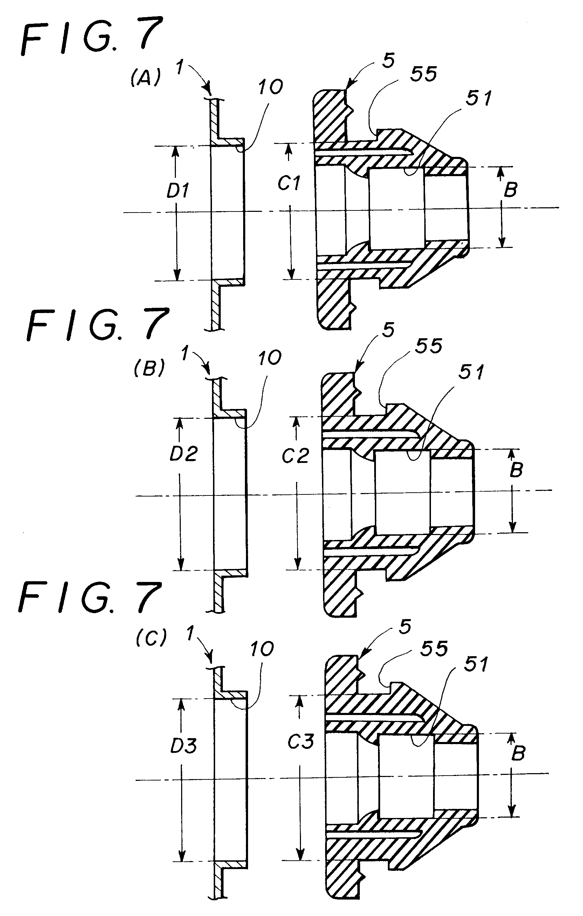

In the outer circumference of the outer member 5, the annular engagement groove 55 is formed between the middle-diameter tubular portion 504 and the flange 505 to tightly fit the outer member 5 on the flange 11 at the edge of the opening 10 in the wall 1. As shown in Fig. 7, the outside diameter C1, C2 or C3 of the engagement groove 55 is a little larger than the inside diameter D1, D2 or D3, respectively, of the opening 10 in the wall 1 so that the outer member 5 can be tightly fitted at the groove 55 thereof on the flange 11 of the wall 1. Also, the width of the engagement groove 55 is nearly equal to or a little smaller than the length of the flange 11 of the wall 1. Further, a circular projection or bead 56 having a triangular sectional shape is formed integrally on the surface, of the flange 505 of the outer member 5, which is to abut the surface of the wall 1.

There is formed between the inner circumference of the small-diameter retention hole 50 and that (tight-fit portion 57) of the medium-diameter retention hole 51 of the outer member 5 a circular step 53 serving as a stopper to prevent the inner member 4 from slipping out of the retention hole 50. Also, there is formed between the inner circumference of the medium-diameter retention hole 51 and that of the large-diameter retention hole 52 a circular pawl 54 serving as a stopper to prevent the inner member 4 from slipping out of the retention hole 51. The pawl 54 is curved at a face 540 thereof at the side of the large-diameter retention hole 52 so that the inner member 4 can be easily pressed into the tight-fit portion 57, and a flat face 541 at the side of the medium-diameter retention hole 51.

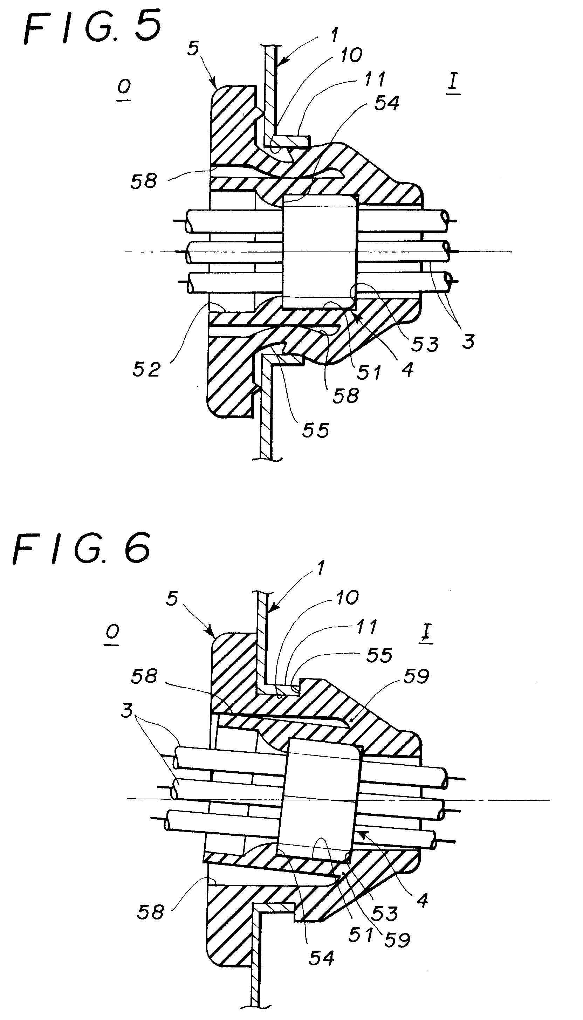

The outer member 5 has an annular recess 58 formed in the other end face 501 thereof between the inner circumference of the tight-fit portion 57, etc. thereof and that of the engagement groove 55, etc. Thus, the tight-fit portion 57 can be tilted about a base 59 of the recess 58 with respect to the inserting direction of the lead wires 3 (as shown in Fig. 6).

The first embodiment of the lead-wire grommet according to the present invention is constructed as having been described in the foregoing, and it is to be assembled as will be discussed below.

First, the lead wire 3 is pressed into into each insertion hole 40 in the inner member 4 through the slit 41. It will thus be tightly fitted in the insertion hole 40.

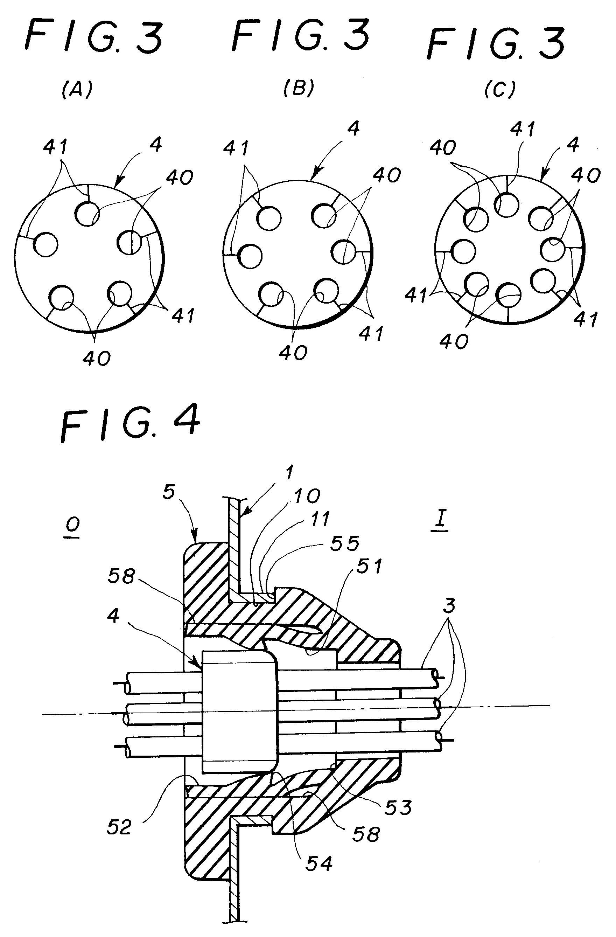

Next, the outer member 5 is engaged at the engagement groove 55 thereof as tightly fitted on the flange 11 of the wall 1 as shown in Fig. 4. Then, the inner member 4 in which the lead wires 3 already water-tightly set is pressed into the tight-fit portion 57 from the large-diameter retention hole 52 of the outer member 5 already fixed to the wall 1. Since the outer member 5 is deflectable at the tight-fit portion 57 thereof outwardly at this time because of the recess 58 formed in the outer member 1, the inner member 4 can be easily forced over the pawl 54 from the large-diameter retention hole into the tight-fit portion 57.

When the inner member 4 has been pressed into the tight-fit portion 57 of the outer member 5, it will be retained as tightly fitted there. Therefore, the tight fitting of the inner member 4 in the tight-fit portion 57 of the outer member 5 causes the walls of each slit 41 in the inner member 4 to closely fit each other, resulting in a higher watertightness.

The lead-wire grommet according to the present invention can be assembled in another manner which will be described below. Namely, the lead wires are water-tightly set in the inner member 4 as having been described above. The inner member 4 is water-tightly set in the tight-fit portion 57. Then, the outer member 5 having the inner member 4 set therein is force-fitted at one end thereof into the opening 10 in the wall 1 as shown in Fig. 5. Since the outer member 5 is deflectable inwardly because of the recess 58 when forced into the opening 10 in the wall 1, it can be easily fit at the engagement groove 55 thereof on the flange 11 of the wall 1. Also in this case, the tightly fitted relation between the tight-fit portion 57 of the outer member 5 and the inner member 4 causes the walls of the slits 41 in the inner member 4 to closely fit each other, thus ensuring an improved watertightness of the structure.

The lead-wire grommet according to the present invention can freely follow up with the movement of the lead wires 3 since the inner member 4 and the tight-fit portion 57, etc. of the outer member 5, which retains the inner member 4, are tiltable about the base 59 of the outer member 5 with respect to the inserting direction of the lead wires 3 as shown in Fig. 6. Therefore, no excessive force is applied to the portions where the walls of the slits 41 in the inner member 4 fit each other, the outer circumferences of the lead wire 3 fit the inner circumferences of the insertion holes 40 in the inner member 4, the outer circumference of the inner member 4 fit the inner circumference of the tight-fit portion 57 of the outer member 5, and the groove 5 in the outer member 5 fits the flange 11 of the wall 1, respectively. Thus, the close fitting of such portions is securely maintained so that the higher watertightness can be assured.

In case the inside diameters D1, D2 and D3 of the opening 10 in the wall 1 are different from one another as shown in Figs. 7(A), 7(B) and 7(C), the inside dimension B of the tight-fit portion 57 (medium-diameter retention hole 51) of the outer member 5 is to be taken as a common dimension and the outside dimensions C1, C2 and C3 of the engagement groove 55 in the outer member 5 are to be determined correspondingly to the inside diameters D1, D2 and D3, respectively, of the opening 10 in the wall 1. Namely, by preparing various kinds of the outer members 5 different in outside diameters (D1, D2, D3) of the engagement groove 55 as shown in Figs. 7(A), 7(B) and 7(C), it is possible to use an inner member 4 having a predetermined outside diameter A (see Fig. 2) commonly with such outer members 5.

Also, the inner member 4 may have formed therein a selected number of insertion holes 40, for example, five, six or eight holes 40 as shown in Figs. 3(A), 3(B) or 3(C), for a number of lead wires which are to be passed through the inner member 4. A selected one of such inner members 4 having a same outside diameter A can be used with any of the above-mentioned outer members 5.

In the aforementioned embodiment, the circular projection or bead 56 (not shown in Figs. 1, 4 and 6) having a triangular sectional shape is formed integrally on the surface, of the flange 505 of the outer member 5, which is to abut the surface of the wall 1 as having been previously described. When the outer member 5 is fitted at the engagement groove 55 thereof on the flange 11 of the wall 1, the projection 56 is closely attached as collapsed to the surface of the wall 1, which also ensures a further improved watertightness between the outer member 5 and wall 1.

In the embodiment, both the opposite end faces 43 and 45 of the inner member 4 abut the step 53 and the flat face 541 of the pawl 54, respectively, of the outer member 5 so that the inner member 4 can be prevented from slipping out of the retention holes 50, 51 and 52 in the outer member 5.

Figs. 8 to 10 show together the second embodiment of the lead-wire grommet according to the present invention. Similar to the aforementioned first embodiment, this embodiment is used for water-tightly fixing, through a wall, lead wires connecting, for example, a rear combination lamp of a car and a power source to each other. In these Figures, the same reference numerals denote the same elements as in Figs. 1 to 7.

In Figures, reference numeral 8 denotes an outer member made of a synthetic rubber, for example, EPDM (ethylene propylene rubber). The outer member 5 has the general form of a truncated cone of which one end face 800 (right end face in Fig. 8) is formed as a small circle while the other end face 801 (left end face in Fig. 8) is as a large circle. More particularly, the outer member 8 comprises a small-diameter curved portion 802 at the one end thereof, a medium-diameter tubular portion 803 contiguous from the curved end portion 802, an annular engagement groove 85 which will be discussed later, a large-diameter flange 804 at the other end thereof, a slope portion 805 of which the outside diameter gradually decreases as it goes from the flange 804 toward the other end face 801. This structure facilitates to fit the outer member 8 on the flange 804 of the opening 10 in the wall 1.

In the outer circumference of the outer member 8, there is formed between the tubular portion 803 and the flange 804 the engagement groove 85 at which the outer member 8 is tightly fitted on the flange 11 of the wall 1. As shown in Fig. 10, the outside diameter J1, J2 or J3 of the engagement groove 85 is a little larger than the inside diameter D1, D2 or D3, respectively, of the opening 10 in the wall 1 so that the outer member 85 can be tightly fitted at the groove 85 thereof on the flange 11 of the wall 1. Also, the width of the engagement groove 85 is nearly equal to or a little smaller than the length of the flange 11 of the wall 1. Further, a circular projection or bead 86 having a triangular sectional shape is formed integrally on the surface, of the flange 804 of the outer member 8, which is to abut the surface of the wall 1.

The outer member 8 has formed in the center thereof through-holes 80, 81 and 82 in which a cap 6 and ring 7, which will be discussed later, are to be retained as tightly fitted and through which the lead wires 3 are passed. Among these retention holes 80 to 82, the one 80 at one end of the outer member 8 has a large inside diameter E, the middle retention hole 82 has a small inside diameter F and the retention hole 82 at the other end has a large inside diameter. There are formed circular steps 83 and 84 between the inner circumferences of the large-diameter retention through-holes 80 and 82 in the outer member 8 and the inner circumference of the small-diameter retention hole 81.

The inside diameter E of the retention hole 80 at the one end of the outer member 8 and the inside diameter F of the middle retention hole 81 are somewhat smaller than the outside diameter I of the ring 7 which will be discussed later and the outside diameter H of a cylindrical portion 60 of the cap 6 which will also be discussed later, so that the ring 7 and the cylindrical portion 60 are retained as tightly fitted in the inner-circumferential portions of retention holes 80 and 81. These inner-circumferential portions will be referred to as "tight-fit portions 87 and 88", respectively herein.

The cap 6 is made of a synthetic resin and consists of the above-mentioned hollow cylindrical portion 60, a lid portion 61 integrally formed at one end of the cylindrical portion 60, and an opening 62 formed in the center of the lid portion 61 and which communicates with the inside of the cylindrical portion 60. The inside diameter G of the cylindrical portion 60 of the cap 6 is a little smaller than the outside diameter A of the inner member 4 so that the inner member 4 is held as tightly fitted in the cylindrical portion 60. The inner circumference of the cylindrical portion 60 will be referred to as a "tight-fit portion 64" herein.

Of the lid portion 61 of the cap 6, an inner surface 63 inside the cylindrical portion 61 serves as a stopper to receive one end face 43 of the inner member 4.

The ring 7 is made of a synthetic resin. It has an opening 70 formed in the center thereof and also has formed at one end face thereof an annular engagement recess 71 in which the end of the cylindrical portion 60 of the cap 6 is to be fitted. Of the one end face of the ring 7, an inner surface 73 inside the engagement recess 71 serves as a stopper to receive the other end face 45 of the inner member 4.

The second embodiment of the lead-wire grommet according to the present invention is constructed as having been described in the foregoing, and it is to be assembled as will be discussed below.

First, the lead wire 3 is pressed into each insertion hole 40 in the inner member 5 through the slit 41. The lead wire 3 will thus be fitted in the insertion hole 40.

Next, the inner member 4 is pressed into the cylindrical portion 60 of the cap 6 and retained as tightly fit there and thus made to abut at one end face 43 thereof the stopper 63 of the lid portion 61 of the cap 6. The tight fitting between the cylindrical portion 60 of the cap 6 and the inner member 4 causes the walls of the slits 41 in the inner member 4 to closely fit each other, thus ensuring a higher watertightness.

On the other hand, one end of the outer member 8 is pressed into the opening 10 in the wall 1 and the outer member 8 is tightly fitted at the engagement groove 85 thereof on the flange 11 of the opening 10 of the wall 1.

Thereafter, the cylindrical portion 60 of the cap 6 and the ring 7 are pressed into the tight-fit portions 87 and 88 of the outer member 8 and retained as tightly fitted there. With the end of the cylindrical portion 60 of the cap 6 fitted in the engagement recess 71 in the ring 7, the stopper 73 of the ring 7 is made to abut the other end face 45 of the inner member 4 and further the flange 61 of the cap 6 and a portion 72 of the one end face of the ring 7, outside the engagement recess 71, are made to abut the steps 84 and 83, respectively, of the outer member 8. Moreover, the cylindrical portion 60 of the cap 6 and the ring 7 are retained as tightly fitted in the tight-fit portions 87 and 88 of the outer member 8. As a result, the cap 6 and ring 7 will be positively secured in the outer member 8.

On the other end, the inner member 4 is held as tightly fitted in the cylindrical portion 60 of the cap 6, and both end faces 43 and 45 of the inner member 4 are forced to abut the stopper 63 of the cap 6 and the stopper 73 of the ring 7 from opposite sides in the inserting direction of the lead wires 3. Thus, the inner member 5 will be securely fixed in the outer member 8 by means of the cap 6 and ring 7. Therefore, it is possible to prevent the inner member 4 from slipping out of the outer member 8 in the directions of arrows a and b in Fig. 8.

As in the first embodiment having been previously described, in case the inside diameters D1, D2 and D3 of the opening 10 in the wall 1 are different from one another as shown in Figs. 10(A), 10(B) and 10(C), the inside dimensions E and F of the tight-fit portions 80 and 81 of the outer member 8 are to be taken as common dimensions and the outside dimensions J1, J2 and J3 of the engagement groove 85 in the outer member 8 are to be determined correspondingly to the inside diameters D1, D2 and D3, respectively, of the opening 10 in the wall 1. Namely, by preparing various kinds of the outer members 8 different in outside diameters (J1, J2, J3) of the engagement groove 85 as shown in Figs. 10(A), 10(B) and 10(C), it is possible to use an inner member 8 having a predetermined outside diameter A, cap 6 having a predetermined outside diameter H and inside diameter G and a ring 7 having a predetermined outside diameter I commonly with such outer members 8.

Also as in the aforementioned first embodiment, the circular projection or bead 86 (not shown in Fig. 8) having a triangular sectional shape, is formed integrally on the surface, of the cylindrical portion 80 of the outer member 8, which is to abut the wall 1, as having been previously described. When the outer member 8 is fitted at the engagement groove 85 thereof on the flange 11 of the wall 1, the projection 86 is closely attached as collapsed to the surface of the wall 1, which also ensures a further high watertightness between the outer member 8 and wall 1.

Note that the flange may not always be provided at the edge of the opening 10 in the wall 1. In such a case, the outer member 5 of the lead-wire grommet according to the present invention can be fitted at the engagement groove 55 thereof directly to the edge of the opening 10 of the wall 1.

Also, it should be noted that the shapes of the opening 10 in the wall 1 and of the flange 11, profile of the inner member 4, shapes of the outer members 5 and 8, cap 6 and ring 7 are not limited to only those specified herein.

## Claims

1. A lead-wire grommet made of a rubber for water-tightly passing at least a lead wire through an opening formed in a wall, comprising:
an inner member having at least an insertion hole through which the lead wire is passed as tightly fitted, and a slit through which the lead wire is set into the insertion hole; and
an outer member having a retention hole through which the lead wire projecting from the inner member is passed and in which the inner member is retained as tightly fitted, and an engagement groove at which the outer member is tightly fitted on the edge of the opening in the wall.

2. A lead-wire grommet according to Claim 1, wherein the outer member has a tight-fit portion in which the inner member is held as tightly fitted and an engagement portion at which the outer member is fitted on the edge of the opening in the wall;
the tight-fit portion being tiltable with respect to the inserting direction of the lead wire.

3. A lead-wire grommet according to Claim 1, wherein in case the opening in the wall is different in inside dimension from one to another, the inside diameter of the retention hole in the outer member is taken as a common dimension and the outside dimension of the engagement grove is determined correspondingly to the inside dimension of the opening in the wall.

4. A lead-wire grommet according to Claim 2, wherein in case the opening in the wall is different in inside dimension from one to another, the inside diameter of the retention hole in the outer member is taken as a common dimension and the outside dimension of the engagement grove is determined correspondingly to the inside dimension of the opening in the wall.

5. A lead-wire grommet according to Claim 1, wherein the outer member has formed in the inner wall of the retention hole a stopper which prevents the inner member from slipping out of the retention hole.

6. A lead-wire grommet according to Claim 2, wherein the outer member has formed in the inner wall of the retention hole a stopper which prevents the inner member from slipping out of the retention hole.

7. A lead-wire grommet according to Claim 3, wherein the outer member has formed in the inner wall of the retention hole a stopper which prevents the inner member from slipping out of the retention hole.

8. A lead-wire grommet according to Claim 4, wherein the outer member has formed in the inner wall of the retention hole a stopper which prevents the inner member from slipping out of the retention hole.

9. A lead-wire grommet according to Claim 1, wherein the outer member has a circular watertight projection formed on the surface thereof which is to abut the edge of the opening in the wall.

10. A lead-wire grommet according to Claim 2, wherein the outer member has a circular watertight projection formed on the surface thereof which is to abut the edge of the opening in the wall.

11. A lead-wire grommet according to Claim 3, wherein the outer member has a circular watertight projection formed on the surface thereof which is to abut the edge of the opening in the wall.

12. A lead-wire grommet according to Claim 4, wherein the outer member has a circular watertight projection formed on the surface thereof which is to abut the edge of the opening in the wall.

13. A lead-wire grommet according to Claim 5, wherein the outer member has a circular watertight projection formed on the surface thereof which is to abut the edge of the opening in the wall.

14. A lead-wire grommet according to Claim 6, wherein the outer member has a circular watertight projection formed on the surface thereof which is to abut the edge of the opening in the wall.

15. A lead-wire grommet according to Claim 7, wherein the outer member has a circular watertight projection formed on the surface thereof which is to abut the edge of the opening in the wall.

16. A lead-wire grommet according to Claim 8, wherein the outer member has a circular watertight projection formed on the surface thereof which is to abut the edge of the opening in the wall.

17. A lead-wire grommet made of a rubber for water-tightly passing at least a lead wire through an opening formed in a wall, comprising:
an inner member having at least an insertion hole through which the lead wire is passed as tightly fitted, and a slit through which the lead wire is set into the insertion hole;
a synthetic resin-made cap and ring which are to be fitted in each other so that the lead wire projecting from the inner member is passed through the cap and ring, and retain together the inner member from opposite sides in the inserting direction of the lead wire; and
an outer member having a retention hole in which the cap and ring are retained as tightly fitted so that the lead wire projecting from the inner member is passed through it, and an engagement groove at which the outer member is tightly fitted on the edge of the opening in the wall.

18. A lead-wire grommet according to Claim 17, wherein in case the inside dimension of the opening in the wall is different from one to another opening, the inside diameter of the retention hole in the outer member is taken as a common dimension and the outside dimension of the engagement grove is determined correspondingly to the inside dimension of the opening in the wall.

19. A lead-wire grommet according to Claim 17, wherein the outer member has a circular watertight projection formed on the surface thereof which is to abut the edge of the opening in the wall.

20. A lead-wire grommet according to Claim 18, wherein the outer member has a circular watertight projection formed on the surface thereof which is to abut the edge of the opening in the wall.
